# EUROPÄISCHE PATENTSCHRIFT

(11) **EP 2 582 248 B1**
(45) Veröffentlichungstag und Bekanntmachung des Hinweises auf die Patenterteilung: **30.07.2014**
(21) Anmeldenummer: 12727217.7
(22) Anmeldetag: 06.06.2012
(51) Int. Cl.: A21C 9/08

(54) **VERFAHREN UND VORRICHTUNG ZUM STÜPFELN VON TEIGLINGEN**
METHOD AND APPARATUS FOR STAMPING PIECES OF DOUGH
PROCÉDÉ ET DISPOSITIF D'INCISION DE PÂTONS

(30) Priorität: 08.06.2011 AT 8472011
(43) Veröffentlichungstag der Anmeldung: 24.04.2013
(73) Patentinhaber: König Maschinen Gesellschaft mbH, 8045 Graz (AT)
(72) Erfinder: ROSSMANN, Florian, A-8431 Gralla (AT)
(74) Vertreter: Wildhack & Jellinek
(86) Internationale Anmeldenummer: PCT/AT2012/000159
(87) Internationale Veröffentlichungsnummer: WO 2012/167295

(56) Entgegenhaltungen:
- DE-A1- 3 208 642
- DE-A1- 3 444 526
- DE-U1- 20 014 945
- GB-A- 276 907

## Beschreibung

Die Erfindung betrifft ein Verfahren zum Prägen, Stanzen bzw. Stüpfeln von Teiglingen sowie eine Vorrichtung zur Durchführung eines solchen Verfahrens gemäß dem Oberbegriff des Anspruchs 8.

Verfahren und Vorrichtungen zum Stüpfeln sind aus dem Stand der Technik bekannt. Unter Stüpfeln versteht man das Eindrücken bzw. Einschneiden von Mustern in vorgeformte Teiglinge, beispielsweise Brötchen, Semmeln oder dergleichen. Durch das Stüpfeln wird einerseits das Aussehen der Brötchen verändert, aber auch deren Geschmack beeinflusst. Das nach dem Backen sichtbare Ergebnis des Stüpfelns wird dabei als Ausbund bezeichnet.

Ursprünglich wurde das Stüpfeln durch von Hand betätigte Stempel vorgenommen, die in die zu behandelnden Brötchen gedrückt wurden. Wegen des damit verbundenen hohen Zeitaufwandes haben sich jedoch zunehmend Verfahren zum Stüpfeln von mehreren vorgeformten Teiglingen in einen kontinuierlichen oder chargenweisen Arbeitsgang durchgesetzt, bei denen mehrere Teiglinge zugleich nebeneinander in einem vorbestimmten Takt vorwärtsbewegt und gestüpfelt werden. Eine derartige Vorrichtung ist beispielsweise aus der DE 3444526 oder der DE 20014945 U1 bekannt.

Bei der industriellen Brötchenfertigung besteht der Bedarf, möglichst viele Brötchen mit möglichst identischem Ausbund zu erzeugen. Hohe Stüpfeltakte mit 50 bis 60 Takten pro Minute sind keine Seltenheit und werden insbesondere bei derartigen Geschwindigkeiten hohe Anforderungen an die Stüpfelgenauigkeit gestellt.

Zur Bearbeitung bzw. zur Formgebung von Gebäckstücken ist das System mit Drucktassen in Kombination mit Stempel- bzw. Stüpfelwerkzeugen sehr weit verbreitet. Dabei werden die vorgegarten Teiglinge mittels Gehängen durch den Vorgärschrank geführt, um die erforderliche Gärzeit zu erreichen. Danach werden die Teiglinge an die Stüpfelstation übergeben bzw. in die Drucktassen eingelegt Naturgemäß sind die einzelnen Teiglinge untereinander nicht völlig identisch und besitzen innerhalb der Toleranzen leicht unterschiedliche Gewichte, unterschiedliche Grade der Gare sowie leicht unterschiedliche Formen.

Außerdem erfolgt die Übergabe an die Drucktassen keinesfalls so, dass die Teiglinge immer exakt in der Mitte der Drucktasse zu liegen kommen. Insbesondere diese leicht dezentrale Lage in der Drucktasse führt jedoch dazu, dass die nachfolgende Stüpfelung nicht mittig erfolgt und der Ausbund dadurch asymmetrisch wird. Im Ergebnis sehen die Brötchen dabei alle unterschiedlich aus, was für eine händische Fertigung zwar charmant sein mag, für eine industrielle Erzeugung aber ungeeignet ist.

Bei einigen Gebäckstücken, beispielsweise bei Laugengebäck, ist die gestüpfelte Form sogar so wichtig, dass es erforderlich ist, die Teiglinge ganz exakt in der Mitte der Drucktasse zu stüpfeln, da bereits Abweichungen von unter 1 mm zu großen optischen Unterschieden beim Ausbund führen.

Verschärft wird dieses Problem dadurch, dass - wie einleitend bemerkt - die Taktzahlen sehr hoch sind und außerdem die Fertigung vollautomatisch abläuft und die Ausrichtung der Teiglinge nicht manuell nachkorrigiert werden kann.

Es ist daher Aufgabe der vorliegenden Erfindung, ein Verfahren sowie eine Vorrichtung zu schaffen, mit dem/der Teiglinge rasch und verlässlich gestanzt bzw. gestüpfelt werden können und ein optisch einheitliches und wiederholbares Ergebnis beim Ausbund erzielt wird.

Diese Aufgabe wird bei einem Verfahren der eingangs erwähnten Art durch die Merkmale des Anspruchs 1 gelöst.

Dabei ist vorgesehen, dass der Teigling in eine Drucktasse eingelegt wird, anschließend für eine vorgegebene Zeit Druckluft derart in die Drucktasse zugeführt wird und der Teigling mit Druckluft beaufschlagt wird, dass der Teigling in einer mittigen Position der Drucktasse zentriert wird, und dass dann der Teigling in dieser Position geprägt bzw. gestanzt wird.

Die Druckluft bewirkt dabei ein leichtes Anheben des Teiglings, wodurch der Teigling durch eine gleichmäßige Luftbeaufschlagung automatisch zentral in der Drucktasse ausgerichtet wird bzw. von einer ursprünglichen, leicht dezentralen Position nach innen verschoben wird. Die Genauigkeit der Zentrierung ist sehr hoch, Abweichungen von unter 1 mm lassen sich problemlos erzielen. Nach dem Nachlassen der Druckluftbeaufschlagung verbleibt der Teigling in dieser Position und wird mittig gestüpfelt.

Auf diese Weise kann eine exakt zentrale Stüpfelung auf einfache Weise auch bei sehr hohen Taktgeschwindigkeiten erfolgen. Aufwendige und komplexe Bilderfassungssysteme, die die Form und Lage des Teiglings erfassen und den Stempel positionieren und steuern, sind dann nicht erforderlich. Außerdem wird der Teigling nicht berührt und kann damit auch nicht kontaminiert oder beschädigt werden. Durch Variation der Druckluftmenge kann auf die Eigenschaften des Teiglings, insbesondere auf dessen Gewicht, Größe und Klebrigkeit, Rücksicht genommen werden und auf diese Weise werden die Ungenauigkeiten bei der Übergabe in die Drucktassen ausgeglichen.

Weitere vorteilhafte Ausgestaltungen des Verfahrens werden durch die abhängigen Ansprüche bestimmt:
So ist es gemäß einer vorteilhaften Verfahrensführung möglich, dass die Druckluft durch zumindest eine, vorzugsweise mittig angeordnete, Öffnung im Boden der Drucktasse zugeführt wird und den Teigling direkt von unten beaufschlagt. Auf diese Weise kann der Teigling effizient angehoben und zentriert werden und ist diese Verfahrensführung für gewisse Teiglinge mit bestimmten Eigenschaften vorteilhaft.

Eine weitere Möglichkeit, die zusätzlich oder alternativ eingesetzt werden kann, sieht vor, dass die Druckluft von oben in den ringförmigen Randbereich der Drucktasse bzw. in den Randbereich zwischen Teigling und Rand der Drucktasse zugeführt wird und den Teigling seitlich und von unten beaufschlagt. Hier sind die Luftwege etwas unterschiedlich und muss die Luftzufuhr gezielt ausgerichtet werden. Jedenfalls ist auch diese Verfahrensführung für gewisse Teiglinge vorteilhaft.

In diesem Zusammenhang ist es besonders vorteilhaft vorzusehen, dass die Druckluft an mindestens drei, vorzugsweise genau drei oder vier, gleichmäßig über den Umfang der Drucktasse verteilten Positionen zugeführt wird. Hierdurch wird eine verlässliche Zentrierung erreicht.

Eine ebenfalls sehr einfache und verlässliche Ausrichtung wird gewährleistet, wenn die Druckluft über eine umlaufende Ringdüse gleichförmig entlang des gesamten Umfangs der Drucktasse zugeführt wird.

Ganz besonders vorteilhaft ist die Zentrierung dann, wenn die Teiglinge zu Gebäckstücken weiterverarbeitet werden, bei denen die gestüpfelte Form ein wesentliches Merkmal ist, beispielsweise bei Laugengebäcken, Brioche, Kaisersemmeln etc.

Um Kontaminierungen, Deformierungen oder mechanische Beschädigungen der Teiglinge zu vermeiden, ist es vorteilhaft, wenn die Teiglinge zu keinem Zeitpunkt manuell oder mechanisch gegriffen oder verschoben werden und die Ausrichtung ausschließlich durch die Druckluft erfolgt.

Die Druckluft wird vorteilhafterweise so dosiert, dass sich der Teigling kurzzeitig sogar vollständig von der Drucktasse löst und in einen schwebenden bzw. schwimmenden Zustand versetzt wird. Hierdurch richtet er sich gewissermaßen von selbst in eine zentrale Position aus.

Die oben genannte Aufgabe wird weiters bei einer Vorrichtung der eingangs genannten Art dadurch gelöst, dass Druckluftzufuhrmittel vorgesehen sind, die so angeordnet bzw. zur Drucktasse ausgerichtet sind, dass der Teigling in der Drucktasse mit Druckluft beaufschlagbar und in einer mittigen Position der Drucktasse zentrierbar ist. Die Positionierung und Ausrichtung der Druckluftzufuhrmittel führt dabei zu einem zumindest partiellen Lösen des Teiglings von der Oberfläche der Tasse und dem damit einhergehenden Verschieben bzw. Ausrichten in eine mittige Position. Eine derartige Vorrichtung ist konstruktiv einfach und ohne aufwendige Bilderfassungssysteme zu bewerkstelligen, betriebssicher und führt zu einem sicheren und genauen Positionieren auch bei hohen Taktzahlen. Die Teiglinge werden dabei weder mechanisch noch manuell berührt.

Vorteilhafte Ausgestaltungen der Vorrichtung werden in den abhängigen Ansprüchen beschrieben:
So besteht eine vorteilhafte Möglichkeit darin, dass im Boden jeder Drucktasse zumindest eine, vorzugsweise zentral angeordnete, Öffnung ausgebildet ist, durch die Druckluft über zumindest eine untere Düse zuführbar ist und durch die der Teigling von unten mit Druckluft beaufschlagbar ist. Durch die Anordnung der Druckluftzufuhrmittel unterhalb der Drucktassen bzw. des Förderbandes ist eine platzsparende Vorrichtung gewährleistet, die gleichzeitig die Teiglinge effizient positioniert.

Alternativ oder zusätzlich kann vorteilhaft vorgesehen sein, dass zumindest ein oberes Düsenmittel mit oberen Düsen vorgesehen ist, das im Betrieb oberhalb der Drucktasse angeordnet ist und das auf den ringförmigen Randbereich der Drucktasse bzw. den Randbereich zwischen dem Teigling und dem Rand der Drucktasse ausgerichtet ist und durch das der Teigling seitlich und von unten mit Druckluft beaufschlagbar ist. Auf diese Weise ist eine verlässliche und exakte Ausrichtung der Teiglinge möglich.

In diesem Zusammenhang ist es besonders vorteilhaft, wenn das obere Düsenmittel zumindest drei, vorzugsweise genau drei oder vier, gleichmäßig voneinander beabstandete einzelne obere Düsen umfasst, die gegebenenfalls auf einer Tragekonstruktion angeordnet sind. Eine derartige Vorrichtung ist mechanisch einfach, wenig fehleranfällig und zuverlässig.

Eine gleichmäßige und genaue Positionierung wird erreicht, wenn das obere Düsenmittel als Ringlochdüse ausgestaltet ist, bei der eine Anzahl von umfänglich gleichmäßig verteilten, einzelnen oberen Düsen auf einer gemeinsamen Tragekonstruktion angeordnet sind, wobei die einzelnen oberen Düsen über einen gemeinsamen Luftkanal verbunden und gespeist sind.

Besonders genau und gleichförmig wird die Zentrierung dadurch, dass das obere Düsenmittel als durchgehende Ringdüse mit einer umlaufend offenen oberen Düse ausgestaltet ist, wobei die obere Düse mit einem Luftkanal verbunden und darüber gespeist ist.

Eine vorteilhafte Ausgestaltung der Vorrichtung sieht vor, dass die oberen Düsenmittel und oberen Düsen senkrecht zur Drucktasse bzw. parallel zur zentralen Längsachse ausgerichtet sind.

In diesem Zusammenhang ist es vorteilhaft, wenn die oberen Düsen bis unmittelbar an den oberen Rand der Drucktasse oder bis in den Randbereich hinein reichen und/oder bis dahin verschiebbar sind. Damit kann die Positionierung der Teiglinge gut bewerkstelligt und gesteuert werden.

Unterstützt wird die Vorrichtung in vorteilhafter Weise durch die Ausgestaltung der Drucktasse. Dabei kann vorteilhafterweise vorgesehen sein, dass der Boden der Drucktasse einen zentralen Bereich aufweist, der tiefer als der übrige Boden liegt. Auf diese Weise liegt der Teigling nach dem Einbringen in die Drucktasse bereits in einer relativ zentralen Position und braucht nur mehr geringfügig verschoben werden.

Eine besonders vorteilhafte Ausgestaltung sieht dabei vor, dass die seitliche Bodenfläche der Drucktasse einen sich nach unten hin verjüngenden kegelmantelförmigen oder kegelstumpfmantelförmigen Abschnitt aufweist, wobei der Neigungswinkel, gemessen zur im Betrieb horizontal ausgerichteten Bodenfläche, vorzugsweise zwischen 35° und 55° beträgt.

Eine vorteilhafte, etwa, aber nicht exakt, mittige Vorabausrichtung wird auch dadurch erreicht, dass der Boden der Drucktasse kugelkalottenförmig, kegelförmig oder kegelstumpfförmig ausgestaltet ist.

Um die Positionierung zu erleichtern, ist es weiters vorteilhaft, wenn der Innenraum der Drucktasse symmetrisch zur zentralen Längsachse ist.

Um zu vermeiden, dass sich die Lage der Teiglinge nach der Zentrierung wieder ändert, ist es vorteilhaft, wenn die Drucktasse im Wirkungsbereich der Druckluftzufuhrmittel und der Stanzeinrichtung horizontal ausgerichtet ist.

Eine konstruktiv vorteilhafte Ausführungsform sieht vor, dass die Drucktasse auf einem Förderband geführt ist und dass eine Einrichtung zur Bewegung der Druckluftzufuhrmittel vorgesehen ist, durch die die Druckluftzufuhrmittel während der Luftzufuhr für einen bestimmten Abschnitt mit der gleichen Geschwindigkeit wie die Drucktasse mitbewegbar sind.

Wenn gewährleistet ist, dass die Bewegung der Druckluftzufuhrmittel mit der Bewegung der Stanzeinrichtung gekoppelt ist, können hohe Taktzahlen erreicht werden.

Die Einstellung der Druckluft kann vorteilhafterweise so eingestellt werden, dass der Teigling sich nicht nur partiell von der Drucktasse löst, sondern dass die Druckluft ausreichend ist, um den Teigling kurzzeitig von der Drucktasse vollständig zu lösen und in einen schwebenden Zustand zu versetzen.

Unter Druckluft wird in vorliegendem Text nicht nur Luft als solche verstanden, sondern auch andere Gase, beispielsweise Stickstoff oder CO₂.

Weitere Vorteile und Ausgestaltungen der Erfindung ergeben sich aus der Beschreibung und den beiliegenden Zeichnungen.

Die Erfindung ist anhand von einigen Ausführungsbeispielen in den Zeichnungen schematisch dargestellt und wird im Folgenden unter Bezugnahme auf die Zeichnungen beispielsweise beschrieben.
Fig. 1 zeigt eine schematische Darstellung einer ersten Ausführungsform der erfindungsgemäßen Vorrichtung.
Fig. 2 zeigt eine zweite Ausführungsform der Vorrichtung.
Fig. 2a zeigt eine Ansicht des oberen Düsenmittels von oben.
Fig. 3 zeigt eine dritte Ausführungsform der Vorrichtung.
Fig. 3a zeigt eine Ansicht des oberen Düsenmittels von oben.
Fig. 4 zeigt eine vierte Ausführungsform der Vorrichtung.
Fig. 4a zeigt eine Ansicht des oberen Düsenmittels von oben.
Fig. 5 zeigt eine weitere Ausführungsform in einer Detailansicht.
Fig. 6 zeigt die Vorrichtung gemäß Fig. 5 aus einer anderen Perspektive.
Fig. 7 zeigt die Vorrichtung gemäß Fig. 5 in einer Gesamtansicht.
Fig. 8 zeigt eine Detailansicht von Fig. 7.

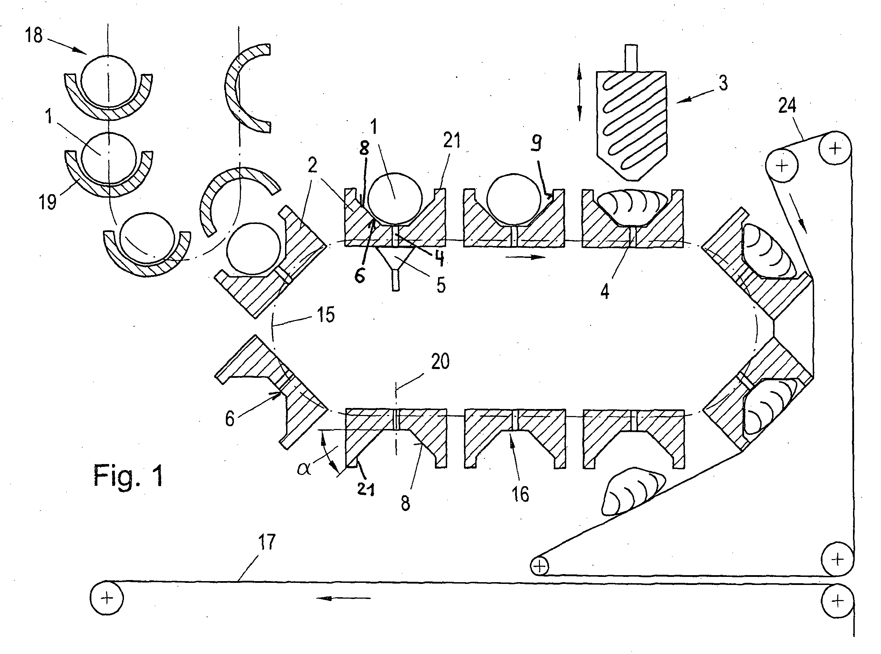

In Fig. 1 ist eine erste Ausführungsform der erfindungsgemäßen Vorrichtung dargestellt. Hierin werden die in Schälen 19 eingelegten Teiglinge 1 von einem Gehänge 18 aus einem Vorgärschrank an eine nachfolgende Stüpfelstation bzw. Stanzeinrichtung 3 übergeben. Dabei werden sie aus den Schalen 19 in auf einem Förderband 15 angeordnete Drucktassen 2 gekippt. Die Drucktassen 2 bewegen sich auf dem Förderband 15 kontinuierlich weiter und transportieren den Teigling 1 in Richtung der Stanzeinrichtung 3. In jeder Drucktasse 2 liegt dabei ein einziger Teigling 1.

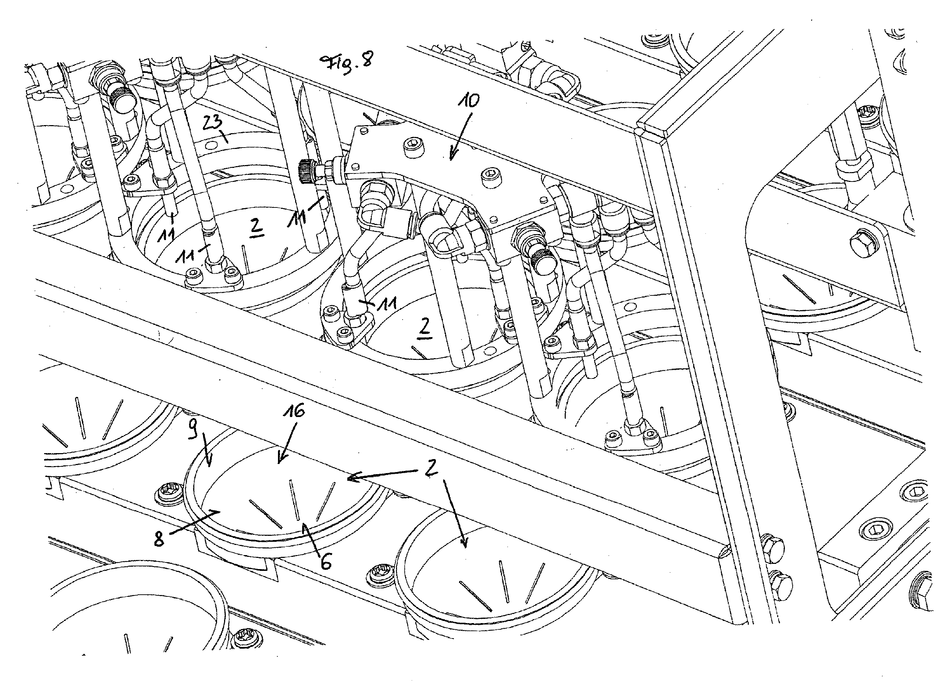

Die Drucktassen 2 sind untereinander identisch aufgebaut. Jede Drucktasse 2 ist symmetrisch bezüglich ihrer im Betrieb vertikal stehenden zentralen Längsachse 20 ausgestaltet. Jede Drucktasse 2 besitzt eine Ausnehmung bzw. Vertiefung zum Aufnehmen des Teiglings 1. Diese Ausnehmung bzw. Vertiefung besitzt einen Boden bzw. eine Bodenfläche 6 mit einem kreisförmigen horizontal ausgerichteten zentralen Bereich 16, der symmetrisch um die zentrale Längsachse 20 herum angeordnet ist und tiefer liegt als der übrige Teil des Bodens 6. Bei der in den Fig. 1 bis 8 dargestellten Ausführungsform der Drucktasse 2 schließt sich an diesen zentralen Bereich 16 ein kegelförmiger Flächenabschnitt 8 an. Der Neigungswinkel α, gemessen zwischen der horizontalen Fläche des zentralen Bereichs 16 und der geneigten Fläche des Abschnitts 8, beträgt etwa 45°. Nach oben hin schließt sich ein zylinderringförmiger vertikaler Abschnitt 9 an, der den obersten Innendurchmesser der Drucktasse 2 definiert und den oberen Rand 21 der Drucktasse 2 darstellt (siehe Fig. 8).

Derartige Drucktassen 2 haben sich im Betrieb als vorteilhaft erwiesen, da sich dadurch der Teigling 1 bereits automatisch zur Mitte der Drucktasse 2 hin orientiert, was bei Drucktassen 2 mit einem flachen Boden nicht der Fall wäre. Alternativ kann die Form des Bodens 6 der Drucktasse 2 auch anders ausgestaltet sein, beispielsweise spitzkegelförmig zulaufend oder kugelkalottenförmig. Der tiefste Punkt sollte immer im Bereich der zentralen Längsachse 20 liegen.

Anschließend wird der Teigling 1, wie in weiterer Folge im Detail beschrieben, zentriert und gelangt dann zur Stanzeinrichtung 3, durch die der Teigling 1 geprägt bzw. gestüpfelt wird. Dadurch erhält der Teigling 1 sein charakteristisches Erscheinungsbild, wobei es darauf ankommt, dass dieses immer identisch und verlässlich in der Mitte des Teiglings 1 und symmetrisch bzw. gleich weit beabstandet zu den Rändern des Teiglings 1 ausgerichtet ist.

Schließlich fährt der gestüpfelte Teigling 1 mitsamt der Drucktasse 2 über das Ausgabeband 24, das den Teigling 1 in der Drucktasse 2 hält, synchron weiter, bis der Teigling 1 letztendlich auf ein Transportband 17 abgelegt wird und zur nicht dargestellten Backstation befördert wird.

Wie in Fig. 1 ersichtlich, ist im Boden 6 bzw. im zentralen Bereich 16 der Drucktasse 2 entlang der Längsachse 20 eine durchgehende zentrale Öffnung 4 ausgebildet. Durch diese Öffnung 4 kann Druckluft von unten in die Drucktasse 2 zugeführt werden. Die Druckluftzuführung erfolgt über ein unterhalb der Drucktasse bzw. unterhalb des Förderbands 15 angeordnetes Druckluftzufuhrmittel in Form einer unteren Düse 5. Die untere Düse 5 bewegt sich hierbei 2 für einen gewissen Abschnitt synchron und geschwindigkeitsgleich mit der Drucktasse 2 mit und bläst dabei Luft durch die Öffnung 4 hindurch.

Der Teigling 1 wird auf diese Weise mittig zentriert, da die Druckluft den Teigling 1 etwas anhebt und am Teigling 1 entlang nach oben entweicht. Die Menge und der Druck der zugeführten Luft wird je nach Gewicht, Form bzw. Klebrigkeit des Teiglings 1 gesteuert. Teilweise kann der Teigling 1 auch völlig vom Boden 6 der Drucktasse 2 gelöst werden und erfährt dann einen kurzen frei schwebenden, schwimmenden Zustand. Vermindert sich die Druckluft, so sitzt der Teigling 1 wieder am Boden 6 auf und ist dabei ganz exakt in der Mitte der Drucktasse 2 und symmetrisch zur Längsachse 20 ausgerichtet. Aufgrund der Tatsache, dass die Drucktasse 2 erschütterungsarm und horizontal zur Stanzeinrichtung 3 geführt wird, verbleibt der zentrierte Teigling 1 auch in dieser Position, bis er gestüpfelt wird.

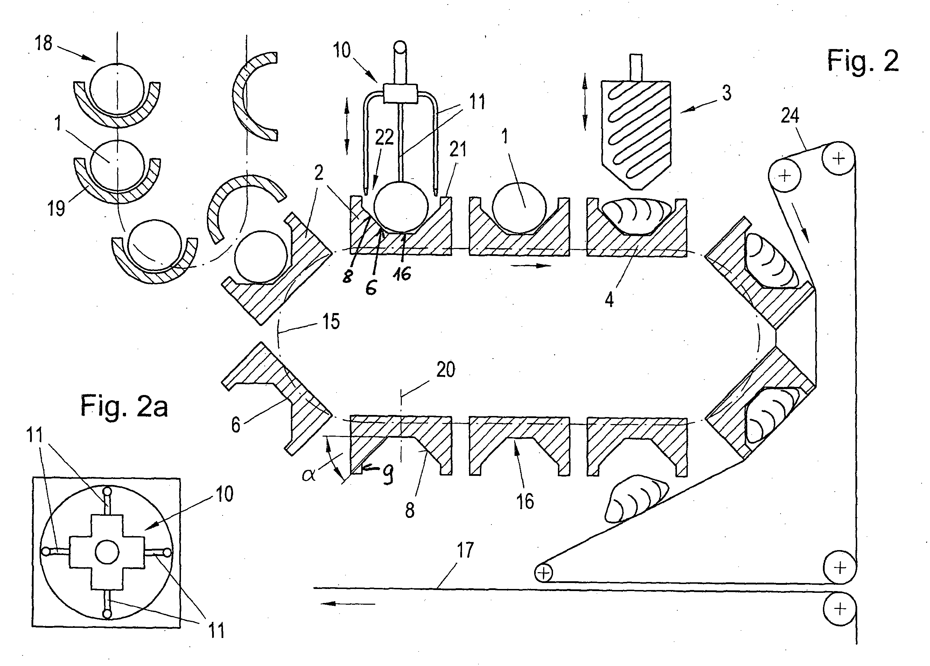

Fig. 2 zeigt eine alternative Ausführungsform der erfindungsgemäßen Vorrichtung, bei der die Druckluft von oben zugeführt wird. Die Drucktassen 2, die Stanzeinrichtung 3 sowie die restliche Vorrichtung sind dabei im Wesentlichen gleich wie bei Fig. 1 und wird deshalb lediglich auf die Unterschiede eingegangen.

Die Drucktassen 2 besitzen in diesem Fall keine untere durchgehende Öffnung 4. Eine solche kann allerdings dennoch ausgebildet sein, wodurch die Vorrichtung flexibler wird, da auf diese Weise optional eine Umstellung der Druckluftzufuhr von oben nach unten erfolgen könnte oder alternativ auch gleichzeitig zusätzlich Druckluft von unten durch die Öffnung 4 zur Unterstützung eingebracht werden könnte.

Gemäß Fig. 2 ist vorgesehen, dass ein oberes Düsenmittel 10 ausgebildet ist. Dieses besitzt vier, ringförmig angeordnete, regelmäßig voneinander beabstandete einzelne obere Düsen 11, die über einen Verteiler gleichmäßig mit Druckluft gespeist werden. Die oberen Düsen 11 sind parallel zur Längsachse 20 ausgerichtet und sind so positioniert, dass sie auf einen freien Randbereich 22 zwischen dem Teigling 1 und dem Rand 21 der Drucktasse 2 ausgerichtet sind. Zudem ragen die oberen Düsen 11 bis unmittelbar an den oberen Rand 21 der Drucktasse 2 heran. Idealerweise sind die oberen Düsen 11 bzw. das obere Düsenmittel 10 axial verschiebbar, um die Höhe variieren zu können.

Erfolgt nun die Zufuhr von Druckluft, wird der Teigling 1 zunächst seitlich mit Luft beaufschlagt. Dadurch hebt sich der Teigling 1 leicht an und kann die Luft auch unter den Teigling 1 gelangen. Aufgrund der Gleichmäßigkeit der Luftzufuhr schwimmt der Teigling 1 dabei kurzzeitig auf und richtet sich dabei automatisch mittig aus, wenn er sich nach der Beendigung der Luftzufuhr wieder absetzt. Auch in diesem Fall wird das obere Düsenmittel 10 für eine gewisse Zeit bzw. für die Zeit der Luftzufuhr mit der Drucktasse 2 mitbewegt.

In Fig. 2a ist eine Ansicht des oberen Düsenmittels 10 von oben gezeigt. Die oberen Düsen 11 sind dabei in Winkeln von jeweils 90° zueinander ausgerichtet.

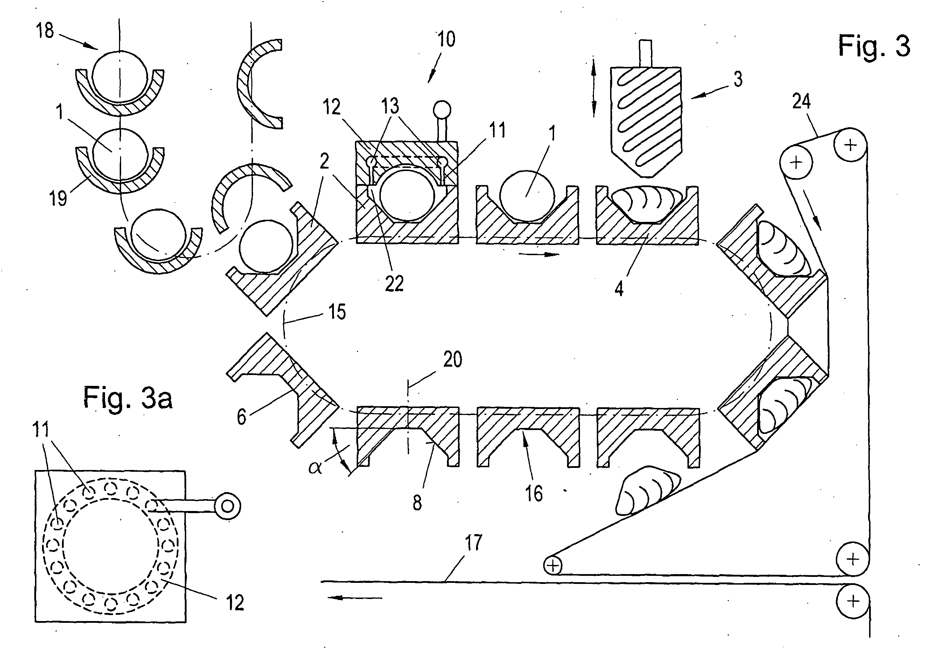

In Fig. 3 ist eine weitere Ausführungsform dargestellt, bei der die Luftzufuhr ebenfalls von oben erfolgt, allerdings über eine Ringlochdüse 12. Hier ist in einer kreisringförmigen Tragekonstruktion ein gemeinsamer Luftkanal 13 ausgebildet, in den die Druckluft zuerst eingebracht wird. Aus diesem Luftkanal 13 münden zahlreiche einzelne bzw. separate Düsen 11 nach unten in den Randbereich 22 der Drucktasse 2. Die Druckluft verteilt sich über den Luftkanal 13 gleichmäßig auf die Düsen 11.

In Fig. 3a ist die Ringlochdüse 12 in einer Draufsicht dargestellt.

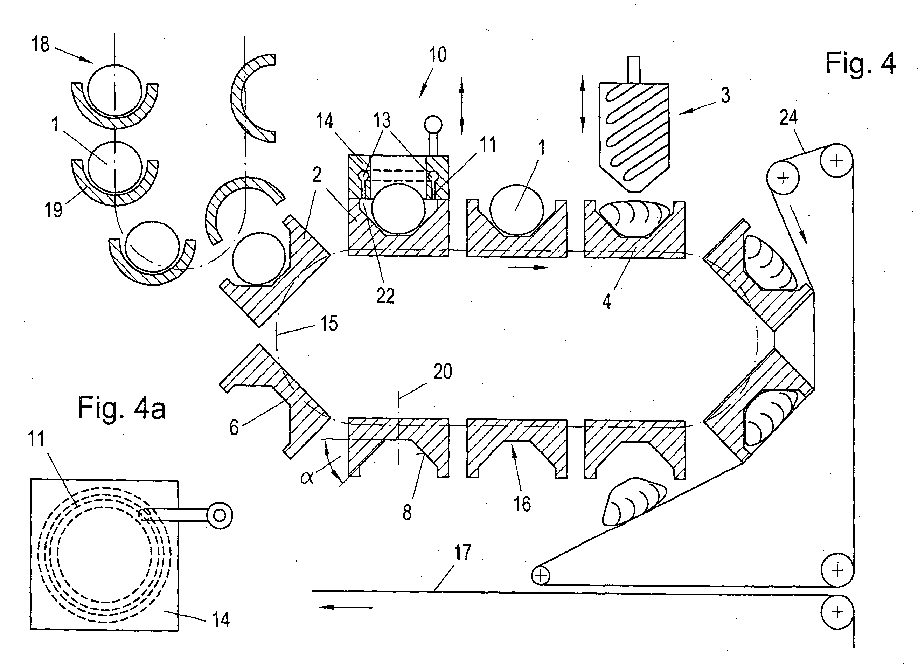

In Fig. 4 ist eine weitere Ausgestaltungsform dargestellt, bei der die Druckluft von oben über eine durchgehende kreisringförmige Ringdüse 14 erfolgt. Hierbei ist auch ein gemeinsamer Luftkanal 13 vorgesehen, allerdings sind darin keine einzelnen Düsenöffnungen ausgebildet, sondern ein einziger umlaufender, durchgehend offener Düsenspalt 11. Auf diese Weise gelangt die Druckluft völlig gleichmäßig ringförmig in den Randbereich 22.

In Fig. 4a ist die Ringdüse 14 in Draufsicht dargestellt.

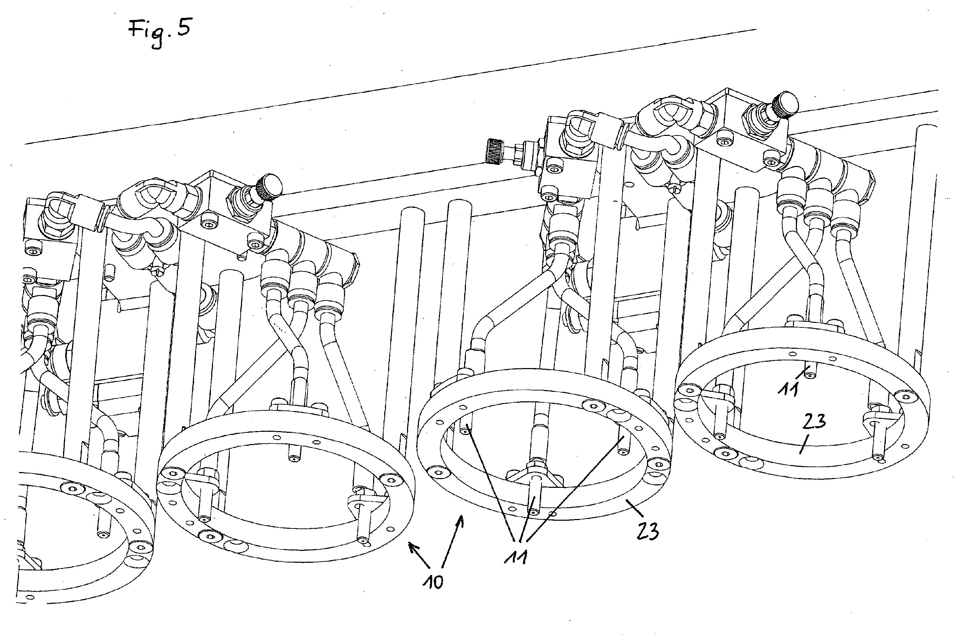

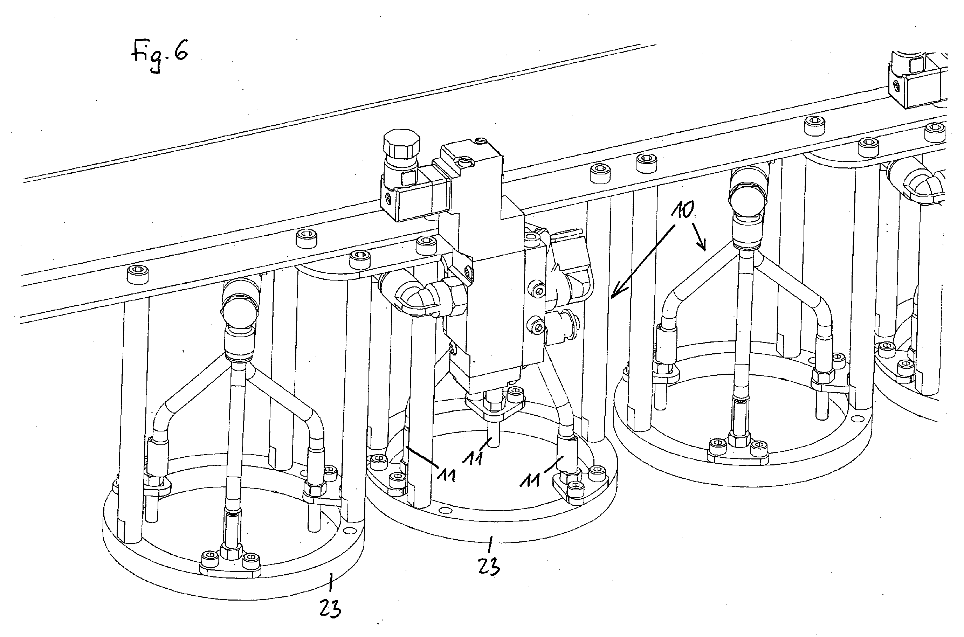

In Fig. 5 und 6 ist eine weitere Ausgestaltungsform beschrieben, bei der die Druckluftzufuhr von oben erfolgt. Hierbei sind drei regelmäßig voneinander beabstandete obere Düsen 11 auf einem ringförmigen Trageelement 23 angeordnet. Damit wird sichergestellt, dass die Düsen 11 exakt und immer gleich ausgerichtet sind und in den Randbereich 22 einblasen können. Um den Durchsatz zu erhöhen, sind mehrere obere Düsenmittel 10 nebeneinander angeordnet und werden in Zweiergruppen von einer gemeinsamen Druckluftzufuhr gespeist.

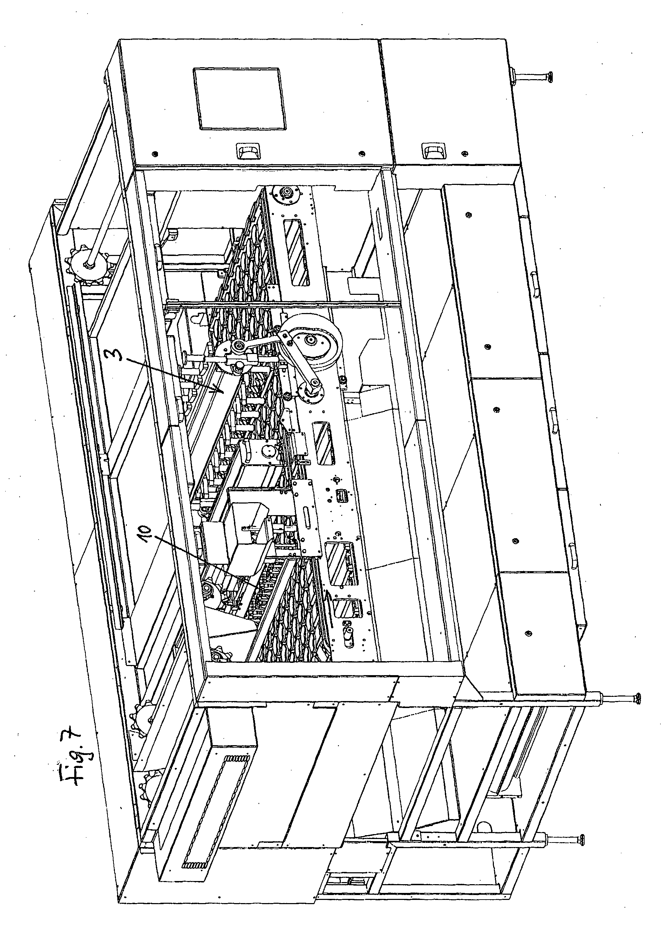

In Fig. 7 ist die Vorrichtung in einer Gesamtansicht dargestellt. Erkennbar ist, dass die Stanzeinrichtung 3 mechanisch mit den Druckluftzufuhrmitteln 10, 11 bewegungsgekoppelt sind. Das Förderband 15 bewegt sich dabei kontinuierlich und sowohl die Druckluftzufuhrmittel als auch die Stempel bewegen sich für eine gewisse Zeit während der Druckluftbeaufschlagung bzw. der Stüpfelung mit den Drucktassen 2 mit. Während dieser Zeit erfolgt auch die Druckluftzufuhr.

Fig. 8 zeigt ein Detail der Vorrichtung von Fig. 7 inklusive der Drucktassen 2. Hier ist erkennbar, dass die oberen Düsen 11 exakt in den Randbereich 22 ausgerichtet sind und senkrecht nach unten weisen.

## Patentansprüche

1. Verfahren zum Prägen, Stanzen bzw. Stüpfeln von Teiglingen (1) *wobei* der Teigling (1) in eine Drucktasse (2) eingelegt wird, und wobei anschließend für eine vorgegebene Zeit Druckluft derart in die Drucktasse (2) zugeführt wird und der Teigling (1) mit Druckluft beaufschlagt wird, dass der Teigling (1) in einer mittigen Position der Drucktasse (2) zentriert wird, und dann der Teigling (1) in dieser Position geprägt bzw. gestanzt wird.

2. Verfahren nach Anspruch 1, **dadurch gekennzeichnet, dass** die Druckluft durch zumindest eine, vorzugsweise mittig angeordnete, Öffnung (4) im Boden (6) der Drucktasse (2) zugeführt wird und den Teigling (1) direkt von unten beaufschlagt.

3. Verfahren nach einem der Ansprüche 1 bis 2, **dadurch gekennzeichnet, dass** die Druckluft von oben in den ringförmigen Randbereich (22) der Drucktasse (2) bzw. in den Randbereich (22) zwischen Teigling (1) und Rand (21) der Drucktasse (2) zugeführt wird und den Teigling (1) seitlich und von unten beaufschlagt.

4. Verfahren nach Anspruch 3, **dadurch gekennzeichnet, dass** die Druckluft an mindestens drei, vorzugsweise genau drei oder vier, gleichmäßig entlang des Umfangs der Drucktasse (2) verteilten Positionen zugeführt wird.

5. Verfahren nach Anspruch 3, **dadurch gekennzeichnet, dass** die Druckluft über eine durchgängig umlaufende Ringdüse (14) gleichförmig entlang des gesamten Umfangs der Drucktasse (2) zugeführt wird.

6. Verfahren nach einem der Ansprüche 1 bis 5, **dadurch gekennzeichnet, dass** die Teiglinge (1) zu Gebäckstücken weiterverarbeitet werden, bei denen die gestüpfelte Form ein wesentliches Merkmal ist, beispielsweise Laugengebäcke, Brioche, Kaisersemmeln etc.

7. Verfahren nach einem der Ansprüche 1 bis 6, **dadurch gekennzeichnet, dass** die Teiglinge (1) zu keinem Zeitpunkt vor der Stüpfelung manuell oder mechanisch gegriffen oder verschoben werden und/oder dass die Druckluft so dosiert wird, dass sich der Teigling (1) kurzzeitig vollständig von der Drucktasse (1) löst und in einen schwebenden Zustand versetzt wird.

8. Vorrichtung zur Durchführung des Verfahrens nach einem der Ansprüche 1 bis 7, umfassend zumindest eine Drucktasse (2) zur etwa mittigen Aufnahme eines Teiglings (1) und zumindest eine Stanzeinrichtung (3) zum Prägen, Stanzen bzw. Stüpfeln des Teiglings (1), **dadurch gekennzeichnet, dass** Druckluftzufuhrmittel (5,10,11,12,13,14) vorgesehen sind, die so angeordnet bzw. zur Drucktasse (2) ausgerichtet sind, dass der Teigling (1) in der Drucktasse (2) mit Druckluft beaufschlagbar und in einer mittigen Position der Drucktasse (2) zentrierbar ist.

9. Vorrichtung nach Anspruch 8, **dadurch gekennzeichnet, dass** zumindest ein unteres Düsenmittel mit zumindest einer unteren Düse (5) vorgesehen ist, das/die im Betrieb unterhalb der Drucktasse (2) angeordnet ist und dass im Boden (6) jeder Drucktasse (2) zumindest eine, vorzugsweise zentral angeordnete, durchgehende Öffnung (4) ausgebildet ist, durch die Druckluft über das untere Düsenmittel bzw. die untere Düse (5) in die Drucktasse (2) zuführbar ist, womit der Teigling (1) von unten mit Druckluft beaufschlagbar ist.

10. Vorrichtung nach einem der Ansprüche 8 bis 9, **dadurch gekennzeichnet, dass** zumindest ein oberes Düsenmittel (10) mit oberen Düsen (11) vorgesehen ist, das im Betrieb oberhalb der Drucktasse (2) angeordnet ist und das auf den ringförmigen Randbereich (22) der Drucktasse (2) bzw. den Randbereich (22) zwischen dem Teigling (1) und dem Rand (21) der Drucktasse (2) ausgerichtet ist und durch das der Teigling (1) seitlich und von unten mit Druckluft beaufschlagbar ist.

11. Vorrichtung nach Anspruch 10, **dadurch gekennzeichnet, dass** das obere Düsenmittel (10) zumindest drei, vorzugsweise genau drei oder vier, gleichmäßig voneinander beabstandete einzelne obere Düsen (11) umfasst, die gegebenenfalls auf einer Tragekonstruktion angeordnet sind.

12. Vorrichtung nach Anspruch 10, **dadurch gekennzeichnet, dass** das obere Düsenmittel (10) als Ringlochdüse (12) ausgestaltet ist, bei der eine Anzahl von umfänglich gleichmäßig verteilten, einzelnen oberen Düsen (11) auf einer gemeinsamen Tragekonstruktion angeordnet sind, wobei die einzelnen oberen Düsen (11) über einen gemeinsamen Luftkanal (13) verbunden und gespeist sind.

13. Vorrichtung nach Anspruch 10, **dadurch gekennzeichnet, dass** das obere Düsenmittel (10) als durchgehende Ringdüse (14) mit einer umlaufend offenen oberen Düse (11) ausgestaltet ist, wobei die obere Düse (11) mit einem Luftkanal (13) verbunden und über diesen gespeist ist.

14. Vorrichtung nach einem der Ansprüche 8 bis 13, **dadurch gekennzeichnet, dass** die oberen Düsenmittel (10) und oberen Düsen (11) senkrecht zur Drucktasse (2) bzw. parallel zur zentralen Längsachse (20) ausgerichtet sind.

15. Vorrichtung nach einem der Ansprüche 8 bis 14, **dadurch gekennzeichnet, dass** die die oberen Düsen (11) bis unmittelbar an den oberen Rand (21) der Drucktasse (2) oder bis in den Randbereich (22) hinein reichen und/oder bis dahin verschiebbar sind.

16. Vorrichtung nach einem der Ansprüche 8 bis 15, **dadurch gekennzeichnet, dass** der Boden (6) der Drucktasse (2) einen zentralen Bereich (16) aufweist, der tiefer als der übrige Boden (6) liegt.

17. Vorrichtung nach einem der Ansprüche 8 bis 16, **dadurch gekennzeichnet, dass** die Drucktasse (2) einen sich nach unten zu verjüngenden kegelmantelförmigen oder kegelstumpfmantelförmigen Abschnitt (8) aufweist, wobei der Neigungswinkel (α), gemessen zur im Betrieb horizontal ausgerichteten Bodenfläche, vorzugsweise zwischen 35° und 55° beträgt.

18. Vorrichtung nach einem der Ansprüche 8 bis 17, **dadurch gekennzeichnet, dass** der Boden (6) der Drucktasse (2) kugelkalottenförmig, kegelförmig oder kegelstumpfförmig ausgestaltet ist.

19. Vorrichtung nach einem der Ansprüche 8 bis 18, **dadurch gekennzeichnet, dass** der Innenraum der Drucktasse (2) symmetrisch zur zentralen Längsachse (20) ist.

20. Vorrichtung nach einem der Ansprüche 8 bis 19, **dadurch gekennzeichnet, dass** die Drucktasse (2) im Wirkungsbereich der Druckluftzufuhrmittel (5,10,11,12,13,14) und der Stanzeinrichtung (3) horizontal ausgerichtet ist.

21. Vorrichtung nach einem der Ansprüche 8 bis 20, **dadurch gekennzeichnet, dass** die Drucktasse (2) auf einem Förderband (15) geführt ist und dass eine Einrichtung zur Bewegung der Druckluftzufuhrmittel (5,10,11,12,13,14) vorgesehen ist, durch die die Druckluftzufuhrmittel (5,10,11,12,13,14) während der Luftzufuhr für einen bestimmten Abschnitt mit der gleichen Geschwindigkeit wie die Drucktasse (2) mitbewegbar sind.

22. Vorrichtung nach einem der Ansprüche 8 bis 21, **dadurch gekennzeichnet, dass** die Bewegung der Druckluftzufuhrmittel (5,10,11,12,13,14) mit der Bewegung der Stanzeinrichtung (3) gekoppelt ist.

23. Vorrichtung nach einem der Ansprüche 8 bis 22, **dadurch gekennzeichnet, dass** eine Steuerungseinrichtung für die Dosierung der Druckluft vorgesehen ist, wobei die Druckluft von der Steuerungseinrichtung insbesondere so dosierbar ist, dass der Teigling (1) kurzzeitig von der Drucktasse (1) vollständig lösbar und in einen schwebenden Zustand versetzbar ist.

## Claims

1. A method of shaping, punching and/or incising dough pieces (1), wherein the dough piece (1) is inserted into a pressure tray (2) and wherein then pressurized air is delivered to the pressure tray (2) for a predefined time and the dough piece (1) is pressurized with air, so that the dough piece (1) is centered in a central position of the pressure tray (2) and then the dough piece (1) is shaped and/or punched in said position.

2. The method of Claim 1, **characterized in that** the pressurized air is delivered via at least one opening (4), preferably centered, in the bottom (6) of the pressure tray (2) and is applied to the dough piece (1) directly from beneath.

3. The method of any one of Claims 1 and 2, **characterized in that** the pressurized air is delivered from above into the annular peripheral area (22) of the pressure tray (2) and/or into the peripheral area (22) between the dough piece (1) and the brim (21) of the pressure tray (2) and pressurizes the dough piece (1) from the sides and from beneath.

4. The method of Claim 3, **characterized in that** the pressurized air is delivered in at least three, preferably exactly three or four, positions uniformly distributed along the perimeter of the pressure tray (2).

5. The method of Claim 3, **characterized in that** the pressurized air is delivered via an all-round annular jet (14) uniformly along the entire perimeter of the pressure tray (2).

6. The method of any one of Claims 1 to 5, **characterized in that** the dough pieces (1) are further processed into pieces of pastry, in which the incised shape is an essential feature, such as pretzel rolls, brioches, kaiser rolls, etc.

7. The method of any one of Claims 1 to 6, **characterized in that** the dough pieces (1) are at no point in time manually or mechanically handled or moved prior to incising and/or **in that** the pressurized air is dosed such that the dough piece (1) is released entirely from the pressure tray (2) for a short time and put into a suspended state.

8. A device for performing the method of any one of Claims 1 to 7, comprising at least one pressure tray (2) to receive a dough piece (1) approximately at its center and at least one punching device (3) for shaping, punching and/or incising said dough piece (1), **characterized in that** pressurized-air delivery means (5, 10, 11, 12, 13, 14) are provided that are arranged and/or oriented with respect to the pressure tray (2) such that the dough piece (1) within the pressure tray (2) can be pressurized with air and centered in a center position of the pressure tray (2).

9. The device of Claim 8, **characterized in that** at least one lower jet means having at least one lower jet (5) is provided, which is arranged beneath the pressure tray (2) during operation, and **in that** at least one, preferably centered, continuous opening (4) is disposed in the bottom (6) of each pressure tray (2), through which pressurized air can be delivered to the pressure tray (2) via the lower jet means and/or the lower jet (5), whereby the pressurized air can be applied to the dough piece (1) from beneath.

10. The device of any one of Claims 8 and 9, **characterized in that** at least one upper jet means (10) having upper jets (11) is provided, which is arranged above the pressure tray (2) during operation and oriented towards the annular peripheral area (22) of the pressure tray (2) and/or the peripheral area (22) between the dough piece (1) and the brim (21) of the pressure tray (2) and through which the pressurized air can be applied to the dough piece (1) from the sides and from beneath.

11. The device of Claim 10, **characterized in that** the upper jet means (10) comprises at least three, preferably exactly three or four, individual upper jets (11) uniformly spaced apart from each other, which are optionally arranged on a support construction.

12. The device of Claim 10, **characterized in that** the upper jet means (10) is designed as an annular hole jet (12), wherein a number of individual upper jets (11) uniformly distributed along the perimeter are arranged on a common support construction, wherein the individual upper jets (11) are connected and supplied via a common air channel (13).

13. The device of Claim 10, **characterized in that** the upper jet means (10) is designed as a continuously annular hole jet (14) having an all-round open upper jet (11), wherein the upper jet (11) is connected and supplied via an air channel (13).

14. The device of any one of Claims 8 to 13, **characterized in that** the upper jet means (10) and the upper jets (11) are oriented perpendicular to the pressure tray (2) and/or in parallel to the central longitudinal axis (20).

15. The device of any one of Claims 8 to 14, **characterized in that** the upper jets (11) extend and/or are slidable directly until the upper brim (21) of the pressure tray (2) or into the peripheral area (22).

16. The device of any one of Claims 8 to 15, **characterized in that** the bottom (6) of the pressure tray (2) has a central area (16), which is deeper compared to the rest of the bottom (6).

17. The device of any one of Claims 8 to 16, **characterized in that** the pressure tray (2) has a section (8) that is tapered towards the lower end, or frusto-conical, wherein the inclination angle (α) is preferably between 35° and 55°, as measured with respect to the bottom surface, which is horizontally oriented during operation.

18. The device of any one of Claims 8 to 17, **characterized in that** bottom (6) of the pressure tray (2) is calotte-shaped, conical or frusto-conical in shape.

19. The device of any one of Claims 8 to 18, **characterized in that** the interior of the pressure tray (2) is symmetrical with the central longitudinal axis (20).

20. The device of any one of Claims 8 to 19, **characterized in that** the pressure tray (2) is horizontally oriented in the range of the pressurized-air delivery means (5, 10, 11, 12, 13, 14) and the punching device (3).

21. The device of any one of Claims 8 to 20, **characterized in that** the pressure tray (2) is conveyed on a conveyor belt (15) and **in that** a device is provided for moving the pressurized-air delivery means (5, 10, 11, 12, 13, 14), by which the pressurized-air delivery means (5, 10, 11, 12, 13, 14) can be moved along at the same pace as the pressure tray (2) during air delivery for a given section.

22. The device of any one of Claims 8 to 21, **characterized in that** the movement of the pressurized-air delivery means (5, 10, 11, 12, 13, 14) is coupled to the movement of the punching device (3).

23. The device of any one of Claims 8 to 22, **characterized in that** a control device is provided for dosing the pressurized air, wherein the pressurized air is can be in particular dosed by the control device such that the dough piece (1) can be released entirely from the pressure tray (2) for a short time and put into a suspended state.

## Revendications

1. Procédé pour estamper, poinçonner ou inciser d'un pâton (1), le pâton (1) étant inséré dans un logement de pression (2) et ensuite de l'air comprimé étant apporté au logement de pression (2) pendant un temps prédéfini et le pâton (1) étant exposé à l'air comprimé, le pâton (1) étant centré dans une position centrale du logement de pression (2) et ensuite estampé ou poinçonné dans cette position.

2. Procédé selon la revendication 1, **caractérisé en ce que** l'air comprimé est apporté à travers au moins une ouverture (4), de préférence centrale, dans le fond (6) du logement de pression (2) et **en ce que** le pâton (1) est exposé directement par en bas.

3. Procédé selon une des revendications 1 à 2, **caractérisé en ce que** l'air comprimé est apporté d'en haut dans la zone (22) de bord annulaire du logement de pression (2) ou dans la zone (22) de bord entre le pâton (1) et le bord (21) du logement de pression, le pâton (1) étant exposé par les côtés et par en bas.

4. Procédé selon la revendication 3, **caractérisé en ce que** l'air comprimé est apporté dans au moins trois positions, de préférence exactement trois ou quatre, de façon uniforme le long de la circonférence du logement de pression (2).

5. Procédé selon la revendication 3, **caractérisé en ce que** l'air comprimé est apporté den façon uniforme le long de la circonférence du logement de pression (2) à travers une buse (14) annulaire périphérique continue.

6. Procédé selon une des revendications 1 á 5, **caractérisé en ce que** les pâtons (1) sont traités pour obtenir des produits de boulangerie dont une des caractéristiques essentielles est la forme poinçonnée, par exemple des bretzels, des brioches ou des petits pains.

7. Procédé selon une des revendications 1 à 6, **caractérisé en ce que** les pâtons (1) ne sont jamais attrapés manuellement ou machinalement ou déplacés avant le poinçonnement et/ou **en ce que** l'air comprimé est dosé en sorte que brièvement le pâton (1) se détache entièrement du logement de pression (2) et est mis dans un état flottant.

8. Dispositif pour effectuer le procédé selon une des revendications 1 á 7, comprenant au moins un logement de pression (2) pour accueillir un pâton (1) environ centralement et au moins un dispositif (3) de poinçonnage pour estamper, poinçonner ou inciser le pâton (1), **caractérisé en ce que** des moyens (5, 10, 11, 12, 13, 14) d'apport d'air comprimé sont prévus, qui sont disposés ou orientés par rapport au logement de pression (2) pour faire en sorte que le pâton (1) dans le logement de pression (2) puisse être exposé à l'air comprimé et centré dans une position centrale du logement de pression (2).

9. Dispositif selon la revendication 8, **caractérisé en ce qu'**au moins un moyen de buse inférieur avec au moins une buse (5) inférieure est prévu et disposé en dessous du logement de pression (2) pendant l'usage, et **en ce que** dans le fond (6) de chaque logement de pression (2) une ouverture (4) continue, de préférence disposée centralement, est réalisée, à travers laquelle l'air comprimé peut être apporté au logement de pression (2) moyennant le moyen de buse inférieur ou la buse (5) inférieure, le pâton (1) pouvant ainsi être exposé à l'air comprimé.

10. Dispositif selon une des revendications 8 à 9, **caractérisé en ce que** au moins un moyen (10) de buse supérieur avec des buses (11) supérieures est prévu et disposé au-dessus du logement de pression (2) pendant l'usage, et orienté vers la zone (22) de bord annulaire du logement de pression (2) ou vers la zone (22) de bord entre le pâton (1) et le bord (21) du logement de pression (2), et à travers lequel le pâton (1) peut être exposé à l'air comprimé des côtés et par en bas.

11. Dispositif selon la revendication 10, **caractérisé en ce que** le moyen (10) de buse supérieur comprend au moins trois, de préférence exactement trois ou quatre, buses (1) supérieures uniques, espacées l'une de l'autre de façon uniforme, éventuellement disposées sur une construction de support.

12. Dispositif selon la revendication 10, **caractérisé en ce que** le moyen (10) de buse supérieur se présente sous forme de buse (12) annulaire, dans laquelle un nombre de buses (11) supérieures uniques, distribuées de façon circonférentielle uniforme sur une structure de support commune, les buses (11) supérieures uniques étant reliées et alimentées à travers un canal (13) d'air commun.

13. Dispositif selon la revendication 10, **caractérisé en ce que** le moyen (10) de buse supérieure se présente sous forme de buse annulaire (14) continue avec une buse (11) supérieure ouverte périphérique, la buse (11) supérieure étant reliée avec un canal (13) d'air et alimentée par celui-ci.

14. Dispositif selon une des revendications 8 à 13, **caractérisé en ce que** les moyens (10) de buse supérieurs et les buses (11) supérieures sont orientés perpendiculairement au logement de pression (2) ou parallèlement à l'axe (20) longitudinal central.

15. Dispositif selon une des revendications 8 à 14, **caractérisé en ce que** les buses (11) s'étendent directement jusqu'au bord (21) supérieur du logement de pression (2) ou jusqu'à l'intérieur dans la zone (22) de bord et/ou peuvent êtres décalées jusque-là.

16. Dispositif selon une des revendications 8 à 15, **caractérisé en ce que** le fond (6) du logement de pression (2) présente une zone (16) centrale plus profonde que le reste du fond (6).

17. Dispositif selon une des revendications 8 à 16, **caractérisé en ce que** le logement de pression (2) présente une portion (8) conique ou tronconique s'effilant vers le bas, l'angle d'inclinaison (α) par rapport à la surface du fond orientée horizontalement pendant l'usage étant de préférence de entre 35 ° à 55 °.

18. Dispositif selon une des revendications 8 à 17, **caractérisé en ce que** le fond (6) du logement de pression (2) se présente sous forme de calotte sphérique, de cône ou de cône tronqué.

19. Dispositif selon une des revendications 8 à 18, **caractérisé en ce que** l'intérieur du logement de pression (2) est symétrique à l'axe (20) longitudinal.

20. Dispositif selon une des revendications 8 à 19, **caractérisé en ce que** le logement de pression (2) est orienté horizontalement dans la zone d'action des moyens (5, 10, 11, 12, 13, 14) d'apport d'air comprimé et du dispositif (3) de poinçonnage.

21. Dispositif selon une des revendications 8 à 20, **caractérisé en ce que** le logement de pression (2) est transporté sur un convoyeur (15) et **en ce qu'**un dispositif pour déplacer le moyen (5, 10, 11, 12, 13, 14) d'apport d'air comprimé est prévu, moyennant lequel les moyens (5, 10, 11, 12, 13, 14) d'apport d'air comprimé peuvent également être déplaces pendant l'apport d'air à la même vitesse que le logement de pression (2) le long d'une certaine section.

22. Dispositif selon une des revendications 8 à 21, **caractérisé en ce que** le mouvement des moyens (5, 10, 11, 12, 13, 14) d'apport d'air comprimé est accordé au mouvement du dispositif (3) de poinçonnage.

23. Dispositif selon une des revendications 8 à 22, **caractérisé en ce qu'**un dispositif de contrôle pour le dosage de l'air comprimé est prévu, l'air comprimé pouvant en particulier être dosé en sorte que le pâton (1) est brièvement entièrement détachable du logement de pression (2) et peut être mis dans un état flottant.
